(19) **Europäisches Patentamt / European Patent Office / Office européen des brevets**

(11) **EP 2 596 141 B1**

(12) **FASCICULE DE BREVET EUROPEEN**

(45) Date de publication et mention de la délivrance du brevet:
**12.11.2014 Bulletin 2014/46**

(21) Numéro de dépôt: **11749514.3**

(22) Date de dépôt: **12.07.2011**

(51) Int Cl.:
*C22C 1/00* *(2006.01)*    *C22C 33/00* *(2006.01)*
*C22C 45/00* *(2006.01)*    *C22C 45/04* *(2006.01)*
*F16F 1/02* *(2006.01)*    *C22C 19/07* *(2006.01)*
*C22C 38/00* *(2006.01)*    *C22C 45/02* *(2006.01)*

(86) Numéro de dépôt international:
**PCT/IB2011/001644**

(87) Numéro de publication internationale:
**WO 2012/010940 (26.01.2012 Gazette 2012/04)**

(54) **ALLIAGE MÉTALLIQUE AMORPHE**

AMORPHE METALLISCHE LEGIERUNG

AMORPHOUS METAL ALLOY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2010 EP 10356022**

(43) Date de publication de la demande:
**29.05.2013 Bulletin 2013/22**

(73) Titulaire: **ROLEX SA**
**1211 Genève 26 (CH)**

(72) Inventeurs:
• **ALJERF, Moustafa**
**Salamieh, Hama (SY)**
• **GEORGARAKIS, Konstantinos**
**F-38700 La Tronche (FR)**

• **GYGER, Thomas**
**CH-2712 Le Fuet (CH)**
• **LE MOULEC, Alain**
**F-38610 Gières (FR)**
• **VON NIEDERHÄUSERN, Vicent**
**CH-2830 Courrendlin (CH)**
• **YAVARI, Alain**
**F-38700 La Tronche (FR)**

(74) Mandataire: **Moinas & Savoye SA**
**42, rue Plantamour**
**1201 Genève (CH)**

(56) Documents cités:
EP-A1- 0 072 893    WO-A1-2010/000081
FR-A- 1 108 101    JP-A- 4 124 246
JP-A- 2001 279 387    US-A- 4 755 239
US-A1- 2003 150 528

**Description**

L'invention concerne un alliage métallique amorphe pouvant être utilisé dans le domaine des applications mécaniques, en particulier comme ressort.

**Arrière-plan de l'invention**

Les alliages métalliques amorphes, aussi appelés verres métalliques, ont la particularité de ne pas avoir d'ordre atomique à longue portée. Ils présentent un grand intérêt pour des applications mécaniques car ils peuvent présenter une haute contrainte à la rupture et un grand domaine de sollicitation élastique. En général, les verres métalliques ont une contrainte à la rupture nettement plus élevée que les alliages cristallins à module de Young équivalent.

Ces matériaux ont un indice d'Ashby $\sigma^2/E$ très élevé, ce qui les place comme des matériaux de choix pour réaliser des ressorts de stockage d'énergie. Cependant, une étude des propriétés mécaniques des verres métalliques indique que seuls les verres métalliques à base Fe ou Co seraient capables de concurrencer les meilleures aciers et alliages ressorts connus. Parmi ces alliages, on connaît les alliages Fe-Si ou Fe-Co-Si ou Fe-Si-B utilisés pour leurs propriétés magnétiques sous forme de rubans d'une trentaine de microns d'épaisseur dans les noyaux d'inducteurs ainsi que des alliages destinés à former des verres métalliques massifs, comme par exemple dans [Gu et al., Mechanical properties of iron-based bulk metallic glasses, J. Mater. Res. 22, 258 (2007)]. Il est également connu que ces alliages sont fragiles, soit après mise en forme en ce qui concerne les rubans magnétiques, soit intrinsèquement fragiles en ce qui concerne les verres métalliques massifs.

Or, une application mécanique, notamment comme ressort, nécessite une tolérance à la déformation plastique et/ou une tenue en fatigue, ce qui implique une certaine ductilité du matériau. De plus, la majorité de ces alliages sont magnétisables, ce qui peut provoquer des perturbations de certains éléments du mécanisme.

Quelques publications scientifiques mentionnent l'existence de plasticité pour certaines compositions de verres métalliques à base de Fe ou Co, comme par exemple $Fe_{59}Cr_6Mo_{14}C_{15}B_6$ relevé dans la publication mentionnée plus haut.

La demande de brevet européen n° EP 0018096 a pour objet des poudres constituées de grains ultrafins d'alliage de métal de transition contenant du bore à raison notamment de 5 à 12% atomiques. Ces poudres sont destinées à la fabrication d'outils de coupe.

La demande de brevet européen n° EP 0072893 concerne des verres métalliques constitués essentiellement de 66 à 82% atomiques de fer, dont 1 à 8% peuvent éventuellement être remplacés par au moins un élément choisi parmi le nickel, le cobalt et leurs mélanges, de 1 à 6% atomiques d'au moins un élément choisi parmi le chrome, le molybdène, le tungstène, le vanadium, le niobium, le tantale, le titane, le zirconium et le hafnium et de 17 à 28% atomiques de bore dont 0,5 à 6% peuvent éventuellement remplacés par du silicium et 2% au plus peuvent être remplacés par du carbone. Ces verres métalliques sont destinés à des têtes de lecture de magnétophone, des noyaux de relais, des transformateurs et à des appareils similaires.

Dans la demande internationale de brevet n° WO 2010/000081 est décrite l'utilisation d'un ruban constitué d'un alliage métallique amorphe de formule $Ni_{53}Nb_{20}Zr_8Ti_{10}Co_6Cu_3$ comme ressort de barillet. Malgré de nombreux essais sur des compositions connues de l'état de l'art, comme par exemple $Fe_{59}Cr_6Mo_{14}C_{15}B_6$, les inventeurs ne sont pas parvenus à obtenir des résultats utilisables pour les applications visées en mécanique, à cause de la fragilité de la matière obtenue sous forme de ruban. Dès lors, ils ont entrepris une recherche d'alliages spécifiquement adaptés aux exigences des applications mécaniques. Plus précisément, les inventeurs ont défini un cahier des charges auquel doit satisfaire un alliage métallique essentiellement amorphe afin de pouvoir être utilisé dans une application mécanique, plus particulièrement comme élément ressort. Ainsi, l'alliage métallique doit :

- permettre la réalisation d'un verre métallique (alliage amorphe) d'épaisseur de 1 micron ou plus, sous forme ruban élaboré par exemple par solidification rapide ( « melt-spinning » ou « planar Flow Casting »), ou sous forme de fil mince élaboré par exemple par trempe rapide à l'eau (A.O. Olofinjana et al, J. of Materials Processing Tech. Vol. 155-156 (2004) pp. 1344-1349) ou par trempe sur disque (T. Zhang et A. Inoue, Mater.Trans. JIM, vol.41 (2000) pp.1463-1466) ;
- avoir une résistance mécanique élevée ;
- de préférence être ductile sous la forme d'un ruban ou fil tel que décrit ci-dessus, c'est-à-dire ne cassant pas lors d'une sollicitation à 180° (diamètre à la rupture inférieur à 1 mm lorsque que le ruban ou fil est replié sur lui-même) et présentant une plage de déformation plastique ;
- de préférence présenter une aptitude au recuit (c'est-à-dire pas de dégradation des propriétés mécaniques suite à un recuit de mise en forme).

**Exposé sommaire de l'invention**

L'invention a pour objet un alliage métallique amorphe différent de ceux mentionnés précédemment et satisfaisant aux critères définis dans le cahier des charges précité, afin de pouvoir être utilisé en mécanique.

Cet alliage répond à la formule générale suivante :

$$Fe_aCo_bNi_cN_bdV_eB_fTa_g$$

dans laquelle :

$$0 \leq a \leq 70 \ ;$$

$$0 \leq b \leq 70 \ ;$$

$$8 < c \leq 60 \ ;$$

$$1 \leq d \leq 19 \ ;$$

$$1 \leq e \leq 10 \ ;$$

$$12 < f \leq 25 \ ;$$

$$0 \leq g \leq 5 \ ;$$

avec

$$20 \leq a + b \leq 70 \ ;$$

$$50 \leq a + b + c \leq 90 \ ;$$

$$5 \ \leq d + e \leq 20 \ ; \ et$$

$$a + b + c + d + e + f + g = 100.$$

L'invention a trait également à un procédé de préparation de l'alliage métallique amorphe selon l'invention, qui comprend les étapes suivantes :

a) on réalise une pré-fusion des éléments métalliques purs Fe et/ou Co, Ni, Nb et V dans un récipient ;
b) on chauffe du bore, de façon à éliminer les éventuelles molécules de gaz qu'il contient ;
c) on mélange les éléments métalliques pré-fondus et le bore solide ;
d) on chauffe le mélange obtenu ;
e) on le refroidit ;
f) on répète éventuellement une ou plusieurs fois les étapes d) et e), la dernière étape e) étant une hypertrempe.

D'autres caractéristiques et avantages de l'invention vont maintenant être décrits en détail dans l'exposé qui suit.

## Exposé détaillé de l'invention

Par « métal amorphe » on entend dans le présent exposé un alliage à base métallique sensiblement amorphe, constitué majoritairement d'une phase amorphe, c'est-à-dire dont la fraction volumique de la ou des phase(s) amorphe(s) dans l'ensemble du matériau excède 50%.

Selon l'invention, pour pouvoir répondre au cahier des charges précité, l'alliage métallique amorphe selon l'invention doit répondre à la formule générale précitée. Le fait que la somme des indices a à g est égale à 100 équivaut à dire qu'il s'agit de pourcentages atomiques (at.%).

Selon un mode de réalisation préféré de l'invention, les indices a à g de la formule générale satisfont aux conditions suivantes :

$$0 \leq a \leq 60 \ ;$$

$$0 \leq b \leq 60 \ ;$$

$$10 \leq c \leq 50 \ ;$$

$$2 \leq d \leq 17 \ ;$$

$$2 \leq e \leq 8 \ ;$$

$$14 \leq f \leq 20 \ ;$$

$$0 \leq g \leq 4 \ ;$$

avec

$$25 \leq a + b \leq 65 \ ;$$

$$60 \leq a + b + c \leq 80 \ ;$$

et

$$8 \leq d + e \leq 17.$$

Plus préférentiellement :

$$0 \leq a \leq 56 \ ;$$

$$0 \leq b \leq 54 \ ;$$

$$12 \leq c \leq 40 \ ;$$

$$4 \leq d \leq 14 \; ;$$

$$4 \leq e \leq 6 \; ;$$

$$15 \leq f \leq 17 \; ;$$

$$0 \leq g \leq 4 \; ;$$

avec

$$30 \leq a + b \leq 60 \; ;$$

$$68 \leq a + b + c \leq 75 \; ;$$

et

$$11 \leq d + e \leq 15 .$$

Selon un autre mode de réalisation avantageux de l'invention, l'alliage métallique amorphe selon l'invention est dépourvu de fer, c'est-à-dire que a = 0. Il peut avoir les valeurs préférentielles suivantes :

$$31 \leq b \leq 56 \; ;$$

$$13 \leq c \leq 41 \; ;$$

$$7 \leq d \leq 13 \; ;$$

$$4 \leq e \leq 10 \; ;$$

et

$$13 \leq f \leq 17 .$$

Si en outre g = 0, l'alliage métallique amorphe appartient alors au système Co-Ni-Nb-V-B.
Selon un autre mode de réalisation avantageux de l'invention, l'alliage métallique amorphe selon l'invention est dépourvu de cobalt, c'est-à-dire que b = 0. Si en outre g = 0, l'alliage appartient alors au système Fe-Ni-Nb-V-B. Il peut avoir les valeurs préférentielles suivantes :

$$47 \leq a \leq 57 \; ;$$

$$17 \leq c \leq 23 \; ;$$

$$3 \leq d \leq 9 \; ;$$

$$4 \leq e \leq 10 \; ;$$

et

$$13 \leq f \leq 17 .$$

Selon un autre mode de réalisation de l'invention, l'alliage métallique amorphe est contient obligatoirement du fer et du cobalt, c'est-à-dire que a et b sont tous deux différents de zéro.

Procédé de préparation

L'alliage métallique amorphe selon l'invention peut être préparé de la manière suivante :

a) on réalise une pré-fusion des éléments métalliques purs Fe (99,95%) et/ou Co (99,95%), Ni (99,98%), Nb (99,99%) et V (99,8%) dans un récipient disposé dans un four, par exemple, un four à arc du modèle MAM1 du fabricant Edmund Bühler, sous atmosphère inerte, par exemple d'argon, de façon à éliminer les éventuels oxydes contenus dans les métaux ;
b) on chauffe du bore à l'état sensiblement pur (99.5%) dans un creuset en quartz entouré d'un creuset en graphite chauffé par induction à température élevée, par exemple de 1200°C, et sous vide partiel, de l'ordre de $10^{-6}$ mbar, afin de réaliser un dégazage, c'est-à-dire d'éliminer les éventuelles molécules de gaz, comme l'oxygène, l'azote et oxydes présents dans le bore ;
c) on dispose les éléments dans un four, notamment à arc.
d) on chauffe l'ensemble, préférablement pendant une durée inférieure à 1 minute, sous atmosphère inerte, par exemple d'argon, à une température sensiblement supérieure à la température de fusion de l'alliage ;
e) on laisse refroidir sous atmosphère inerte ;
f) on répète le cycle des étapes d) et e) plusieurs fois, de façon à homogénéiser l'alliage. Pour obtenir une structure amorphe à partir de l'alliage élaboré, la dernière étape e) de refroidissement après une mise en fusion de l'alliage (étape d) doit être une hypertrempe. Par hypertrempe, on entend ici une trempe ultrarapide, c'est-à-dire un refroidissement à une vitesse supérieure à 1 000 K/s qui permet de vitrifier l'alliage. L'alliage peut ensuite être coulé sous forme de ruban ou de fil.

Tout procédé ou méthode de mise en forme peut alors être utilisé(e). On peut citer par exemple le procédé faisant l'objet de la demande internationale précitée WO2010/000081.

Selon un mode de réalisation avantageux de l'invention, l'hypertrempe et la coulée de l'alliage sous forme de ruban ou de fil sont réalisées simultanément, par éjection de l'alliage liquide sur une ou deux roues en rotation, par exemple en mettant en oeuvre la méthode appelée « Twin Roll Casting » (coulée entre deux roues ), ou mieux encore, la méthode appelée PFC (« Planar Flow Casting »).

La méthode PFC consiste essentiellement à chauffer l'alliage par induction, dans un creuset en nitrure de bore, à une température de 100°C au-delà de son point de fusion, sous une pression partielle d'hélium (typiquement 500 mbar). L'alliage est ensuite éjecté à travers une buse sur une roue de refroidissement en cuivre tournant à haute vitesse. On obtient ainsi directement un ruban qui est rectiligne et présente un excellent état de surface.

Selon un autre mode de réalisation avantageux de l'invention, l'étape c) du procédé est divisée en sous-étapes de formation de mélanges partiels de manière à former des pré-alliages dont la température de fusion Tm est beaucoup moins élevée que celle des constituants individuels.

Par exemple, pour les alliages du système Fe-Ni-Nb-V-B (b=0 et g=0) qui contiennent des éléments à haute température de fusion (Nb : 2469°C, V : 1910°C), des échantillons des deux compositions binaires eutectiques $Ni_{58.5}Nb_{41.5}$ (Tm = 1184°C) et $Ni_{50}V_{50}$ (Tm = 1220°C) peuvent être fabriqués, puis des quantités correspondant aux pourcentages de V et de Nb sont mélangées. En parallèle, les quantités de Fe et B sont fondues ensemble, puis avec la quantité restante de Ni. Enfin, l'échantillon d'alliage final est réalisé en fusionnant les trois pré-alliages (NiNb + NiV + FeB) et le solde des éléments purs.

Les étapes mentionnées ci-dessus et leur séquencement constituent un exemple non-limitatif pour préparer l'alliage métallique amorphe. Le procédé tel que décrit permet une élaboration fiable et reproductible, et permet aussi de maximiser l'épaisseur limite pour laquelle l'alliage reste ductile. L'obtention d'un alliage amorphe est possible en omettant une ou plusieurs étapes, ou en modifiant les conditions utilisées, mais en général au détriment de la fiabilité du procédé et de l'épaisseur limite.

**Exemples**

I) Méthodes expérimentales

1) Fabrication de rubans

Des alliages métalliques sensiblement amorphes ont été préparés puis coulés directement sous forme de rubans par PFC.

Une épaisseur cible de 65 $\mu$m est fixée, afin de comparer les alliages entre eux. En effet, les propriétés des échantillons, comme la ductilité, la résistance à la fragilisation au recuit, le module d'élasticité de Young et la température de transition vitreuse (Tg) dépendent de la vitesse de refroidissement de l'alliage, donc intrinsèquement de l'épaisseur du ruban.

2) Mesures de flexion

Les propriétés mécaniques en flexion sont mesurées avec un appareil de flexion 2 points. Dans cette méthode, l'échantillon sous forme de ruban est courbé en forme de U entre deux plans parallèles. Un des plans se déplace et l'autre reste fixe. L'appareil mesure simultanément l'écartement entre les plans et la force produite par l'échantillon, comme décrit par exemple dans la demande internationale n° WO2008125281. Les avantages de cette méthode sont de concentrer la contrainte maximale à un endroit qui n'est pas soumis à un contact, de ne pas provoquer de glissement de l'échantillon aux deux points d'appui, ce qui permet ainsi d'induire des contraintes de manière fiable et reproductible ainsi que de grandes déformations.

Pour chaque ruban, trois échantillons de 75 mm de longueur sont testés en flexion. La mesure démarre avec un écartement initial de 16 mm et est arrêtée à un écartement final de 2,3 mm avec une vitesse de déplacement de 0,2 mm/s. Après ce cycle de charge/décharge, l'échantillon est déformé localement de manière plastique.

Pour tous les alliages réalisés, il a été vérifié que la déformation élastique était proche de 2%. Le module élastique a donc été retenu comme indicateur de la résistance mécanique des échantillons.

Comme la section des rubans n'est pas parfaitement rectangulaire (forme trapézoïdale brute de solidification), il faut considérer le module déduit à partir des mesures comme une grandeur représentative de la rigidité apparente en flexion, qui permet de comparer les alliages entre eux, et non pas comme la réelle valeur du module de Young du matériau. Néanmoins, les valeurs présentées sont corrigées d'un facteur de forme pour tenir compte au mieux du moment d'inertie réel et sont relativement proche des valeurs attendues du module de Young pour ce type d'alliages, ainsi que des valeurs déduites de mesures de traction.

3) Mesures calorimétriques

Les propriétés thermiques des verres métalliques ou des alliages métalliques amorphes (température de transition vitreuse Tg, température de cristallisation Tx) sont mesurées par calorimétrie différentielle à balayage (« DSC » : « Differential Scanning Calorimetry ») sur un appareil du type Setaram Setsys Evolution 1700, lors d'une rampe de chauffage à 20°C/min sous un flux d'argon de qualité 6 (20 ml/min). La masse d'échantillon mesurée est de 30 à 50 mg. Les morceaux de ruban sont déposés dans un creuset en alumine.

4) Mesures de diffraction des rayons X

Cette technique est utilisée pour vérifier le caractère amorphe des rubans obtenus. Les mesures ont été effectuées sur un appareil de type Xpert-PRO MPD de Panalytical. Si le signal mesuré ne présente pas de pic de diffraction, l'alliage est considéré comme étant amorphe (AM), par opposition à un alliage cristallin (CR). La limite de détection d'une phase cristalline se situe généralement à 5% (fraction volumique de la phase cristalline) et la profondeur sondée lors de la mesure est typiquement de 5$\mu$m, soit nettement inférieure à l'épaisseur typique du ruban.

5) Mesures de la fragilité au recuit

L'utilisation de rubans d'alliages métalliques amorphes ou sensiblement amorphes comme ressorts, notamment dans un mécanisme et en particulier comme ressort, nécessite une étape de mise en forme du ruban. Cette mise en forme peut être réalisée à chaud et/ou à froid.

Dans le cas d'une mise en forme à froid (et d'une sollicitation mécanique du composant), l'alliage doit se comporter de manière ductile. Le caractère ductile ou fragile d'un ruban est estimé par pliage à 180°. Celui-ci est considéré comme étant ductile si une fois replié sur lui-même à 180°, il ne se rompt pas en deux parties. Le ruban est considéré comme partiellement ductile s'il casse avant d'atteindre un angle de pliage de 180° mais qu'il montre une plastification à l'endroit du pli. Ce test permet d'estimer si la déformation à la rupture a lieu dans le domaine plastique, et représente un critère très sévère qui correspond à plusieurs dizaines de pourcent de déformation dans les fibres en surface.

Dans le cas d'une mise en forme à chaud, il importe que le ruban ne perde pas son caractère ductile initial à la suite du traitement de recuit. Pour vérifier qu'il existe une fenêtre de traitement (temps/température) qui permette la mise en forme sans fragilisation, des recuits ont été effectués sur des bandes initialement droites de 30mm de longueur enroulées à l'intérieur de bagues en aluminium de diamètre intérieur 7,8 mm, soit dans un four, soit par chauffage par jet de gaz chaud.

Une fois la bande refroidie, le diamètre de courbure de la bande relaxée est mesuré avec un pied à coulisse. La bande relaxée est ensuite placée entre les deux plats du pied à coulisse comme dans un essai de flexion 2 points et l'écartement à rupture est noté en rapprochant lentement les deux plats. Le coefficient de fixage est calculé par le rapport entre le diamètre intérieur de la bague $D_0$ et le diamètre de courbure de la bande relaxée $D_f$ (voir demande internationale précitée WO2010/00008 et WO2011/069273).

Un alliage initialement ductile va, au cours d'un recuit à une température donnée (dans ce cas $0,8Tg<T<Tg$), devenir fragile après une durée de recuit donnée $t_0$. Durant ce temps $t_0$ à disposition avant fragilisation de l'alliage, il est possible d'atteindre un certain coefficient de fixage.

L'évaluation de la tenue au recuit des alliages se base essentiellement sur ces deux critères : maximiser le temps de fragilisation au recuit $t_0$ à une température donnée et maximiser le coefficient de fixage obtenu au temps $t_0$. En pratique, il est considéré que l'aptitude au recuit est bonne s'il existe un temps et une température de traitement tels que le ruban reste ductile après traitement thermique avec un taux de fixage >50%.

II) Essais

1) Système Fe-(Co)-Ni-Nb-V-B

Le Tableau 1 suivant décrit les différents alliages élaborés avec les éléments Fe(Co)NiNbVB.

Pour chaque essai, un échantillon ayant une masse variant entre 11,0 et 13,5 g a été utilisé.

Dans un premier temps, la teneur en nickel a été variée dans un intervalle de 18 à 22 at.%, la teneur en niobium de 6 à 8 at.%. Les concentrations du vanadium et du bore ont été maintenues constantes à 5 at.% et 15 at.% respectivement.

Dans un deuxième temps le rapport entre les deux métaux réfractaires V et Nb a été modifié. Une concentration de V de 9 at.% conduit à la fragilisation de l'alliage selon le critère très sévère du test de pliage à 180°C.

Dans d'autres essais (ne figurant pas dans le tableau) effectués avec une concentration en niobium dépassant 10 at.%, on observe la formation d'un intermétallique à haut point de fusion qui rend difficile l'élaboration de ruban par PFC.

Les propriétés mécaniques et thermiques dépendent essentiellement de la concentration en Nb. Les alliages avec une concentration de 8 et 10 at.% en Nb sont fragiles ou fragilisent rapidement lors du recuit de mise en forme selon le critère très sévère du test de pliage à 180°C. Une bonne ductilité après recuit apparaît pour les alliages ayant 6 at.% de Nb, mais au détriment du module élastique (apparent) qui est abaissé.

Les alliages considérés comme fragiles suite au test de pliage à 180° ne sont pas adéquats pour une utilisation comme ressort hautes performances, mais peuvent être tout-à-fait utilisables dans des applications avec des conditions de sollicitation moins sévères. De même, les alliages qui ne présentent pas une tenue au recuit adéquate peuvent être tout-à-fait utilisables dans des applications ne nécessitant pas de mise en forme du ruban ou du fil, notamment d'étape de mise en forme à chaud.

Certaines compositions, comme par exemple la composition $Fe_{52}Ni_{22}Nb_6V_5B_{15}$, montrent néanmoins des propriétés tout-à-fait remarquables, c'est-à-dire un module de Young élevé combiné à une bonne ductilité à au moins 65 $\mu$m d'épaisseur, et ce même après un recuit de mise en forme.

Les rubans obtenus ont une épaisseur variant de 62 à 68 $\mu$m dans 90% des cas, soit très proche de l'épaisseur cible de 65 $\mu$m. Dans la plupart des cas, l'épaisseur critique n'est pas atteinte et des rubans d'épaisseur plus importante peuvent être réalisés. Cette limite peut aussi être repoussée en augmentant la vitesse de refroidissement.

Le tableau 1 fournit aussi une information importante : la grande majorité des rubans ductiles présentent un pic d'une phase cristalline du côté « libre » du ruban, soit la face au contact avec l'atmosphère, par opposition à la face « roue » ayant été en contact avec la roue de cuivre. Cette phase cristalline, signalée par AM/CR dans le tableau, est formée de nanocristaux, dont la taille est estimée à 8-10 nm par la mesure de la largeur des pics de diffraction de rayons X, dispersés dans la matrice amorphe. Il est connu que la présence de nanocristaux peut, sous certaines conditions, favoriser la plasticité des verres métalliques [Hajlaoui et al., Shear delocalization and crack blunting of a metallic glass containing nanoparticles: In situ déformation in TEM analysis, Scripta materialia 54, 1829 (2006)]. Néanmoins, aucune corrélation entre la présence ou non de cette phase et la ductilité de l'alliage n'est observée.

Les mesures de diffraction des rayons X permettent d'estimer la fraction volumique totale. L'intensité du signal de la phase cristalline détectée du côté « libre » correspond typiquement à 15% de la fraction volumique sur la profondeur sondée, qui est de 5 $\mu$m environ. Comme aucune phase cristalline n'est détectée du côté « roue », la fraction volumique totale est beaucoup plus faible que cette valeur, et probablement nettement inférieure à 10%. On peut donc affirmer que la fraction volumique cristalline totale est inférieure à 50% pour tous les alliages mesurés. Il convient de noter que la valeur exacte de la fraction volumique pour une composition et une épaisseur données dépend également les conditions d'élaboration (température de coulée, état de surface de la roue, alliage de la roue, etc), qui sont autant de paramètres qui influencent la vitesse de refroidissement.

| | **TABLEAU 1** | | | | | | | | | | | | | | | |
|---|---|---|---|---|---|---|---|---|---|---|---|---|---|---|---|---|
| Alliages | Composition | | | | | | | | Épaisseur | Structure (DRX) | | DSC | | Ductilité (test 180°) | E [GPa] | Tenue au recuit |
| | Fe A | Co b | Ni c | Nb d | V e | B f | Base a+b+c | Refr d+e | [µm] | Côté libre | Côté roue | Tg [°C] | Tx [°C] | - | | |
| Fe50Ni22Nb8V 5B15 | 50 | - | 22 | 8 | 5 | 15 | 72 | 13 | 67 | AM | AM | 495 | 535 | partielle | 157 | Non |
| Fe52Ni20.66Nb 7,33 V5B15 | 52 | - | 20.7 | 7.33 | 5 | 15 | 72,66 | 12.33 | 70 | AM/CR | AM | 485 | 514 | partielle | 153 | Non |
| Fe56Ni18Nb6V 5B15 | 56 | - | 18 | 6 | 5 | 15 | 74 | 11 | 67 | AM/CR | AM | 477 | 504 | ductile | 155 | Oui |
| Fe54Ni20Nb6V 5B15 | 54 | - | 20 . | 6 | 5 | 15 | 74 | 11 | 69 | AM/CR | AM | 471 | 499 | ductile | 152 | Non |
| Fe52Ni22Nb6V 5B15 | 52 | - | 22 | 6 | 5 | 15 | 74 | 11 | 66 | AM/CR | AM | 449 | 494 | ductile | 154 | Oui |
| Fe48Ni22N66V 9B15 | 48 | - | 22 | 6 | 9 | 15 | 70 | 15 | 63 | n.a. | n.a. | 474 | 512 | partielle | 153 | Non |
| Fe52Ni22Nb4V 7B15 | 52 | - | 22 | 4 | 7 | 15 | 74 | 11 | 67 | n.a. | n.a. | 448 | 487 | ductile | 139 | Oui |
| Fe50Ni22Nb6V 7B15 | 50 | - | 22 | 6 | 7 | 15 | 72 | 13 | 63 | AM | AM | 471 | 500 | ductile | 151 | Oui |
| Fe30Co20Ni22 Nb8V5B15 | 30 | 20 | 22 | 8 | 5 | 15 | 72 | 13 | 66 | n.a. | n.a | 473 | 510 | ductile | 150 | Oui |
| Fe36Co24Ni12 Nb8V5B15 | 36 | 24 | 12 | 8 | 5 | 15 | 72 | 13 | 64 | n.a. | n.a. | 485 | 522 | ductile | 153 | Oui |
| AM = totalement amorphe          AM/CR = présentant une phase cristalline<br>n.a. = not available / mesure non effectuée | | | | | | | | | | | | | | | | |

On constate que dans presque tous les cas, le module d'élasticité E est supérieur à 150 GPa.

Le rôle des éléments réfractaires dans les alliages selon l'invention correspond à ce qu'on appelle en anglais « Minor Alloying » qui a un effet moteur dans la formation de verre [Wang et al., Co- and Fe-based multicomponent bulk metallic glasses designed by cluster line and minor alloying, Journal of Materials Research 23, 1543 (2007)]. Dans le système d'alliages selon l'invention, le rôle des éléments réfractaires (Nb, V) ne se limite pas à favoriser la formation du verre car ils modifient les propriétés mécaniques telles que la dureté et la ductilité. Dans ce cadre, la teneur en V a été augmentée sans que celle de Nb dépasse 6 %. Les résultats consignés au tableau 1 ne montrent pas d'amélioration significative des différentes propriétés de la bande, sauf la dureté (non indiquée) qui est légèrement augmentée.

L'alliage $Fe_{s2}Ni_{22}Nb_6V_5B_{15}$ est ferromagnétique avec une température de Curie de 453 K (180 °C), ce qui est plus bas que la température de Curie des alliages binaires amorphes Fe-B. Cette baisse est attribuée à l'ajout des éléments d'addition, surtout du Nb qui est un élément connu pour cet effet [Yavari et al., On the Nature of the Remaining Amorphous Matrix after Nanocrystallization of Fe77Si14B9 with Cu and Nb Addition, Materials Science and Engineering A182, 1415 (1994)].

On remarquera aussi que, par la substitution partielle du Fe par le Co, l'alliage peut absorber 8 at.% de Nb sans que la ductilité du ruban ne soit compromise (en comparaison avec le $Fe_{50}Ni_{22}Nb_8V_5B_{15}$).

2) Système Co-Ni-Nb-V-B

Les alliages à base de Co étudiés sont recensés dans le tableau 2. Dans le système Co-Ni-Nb-V-B, il a été possible d'augmenter la teneur en Nb au-delà de la barrière ductile/fragile de 6 %at du système Fe-Ni-Nb-V-B, ce qui permet d'obtenir une dureté et des valeurs du module élastique plus élevées. En revanche, cette barrière se situe à 8 %at pour ce système. La teneur en métalloïde B est limitée à 15 %at, et le 'minor alloying' avec le Ta permet de conserver la ductilité et la dureté mais baisse légèrement la valeur du module élastique.

Dans ce système, les éléments de base cobalt et nickel jouent un rôle essentiel sur les valeurs du module élastique et la tenue au recuit. Le cobalt remplace avantageusement le fer à tous points de vue mais sans nickel, l'alliage perd nettement en dureté. Le module élastique apparent maximal se trouve à 167 GPa pour la composition $Co_{50}Ni_{22}Nb_8V_5B_{15}$, mais il ne peut être affirmé qu'il s'agit d'un optimum pour ce système. On relève aussi qu'une bande ductile de 86 $\mu$m a été élaborée. L'épaisseur critique ductile/fragile n'a toutefois pas été atteinte et est supérieure à 86 $\mu$m.

On constate que dans tous les cas, le module d'élasticité E est supérieur à 150 GPa. Les observations relatives à la présence d'une phase cristalline du côté « libre » des rubans obtenus en alliages à base Fe (tableau 1) ci-dessus s'appliquent également aux alliages à base Co présentés au tableau 2.

Certaines compositions, comme par exemple la composition $Co_{50}Ni_{22}Nb_8V_5B_{15}$, montrent ainsi des propriétés tout-à-fait remarquables, c'est-à-dire un module de Young élevé combiné à une bonne ductilité à au moins 80 $\mu$m d'épaisseur, et ce même après un recuit de mise en forme. Il semble que cela soit la première fois qu'un alliage métallique amorphe combinant ces différentes caractéristiques est obtenu.

L'alliage $Co_{50}Ni_{22}Nb_8V_5B_{15}$ est clairement paramagnétique à température ambiante, car l'aimantation à saturation n'est pas atteinte même avec un champ magnétique de 3 Tesla. Ce comportement paramagnétique s'ajoute aux propriétés mécaniques très intéressantes (module élastique et dureté) et la résistance élevée à la fragilisation.

| TABLEAU 2 | | | | | | | | | | | | | | |
|---|---|---|---|---|---|---|---|---|---|---|---|---|---|---|
| Alliages | Composition | | | | | | | | Épaisseur | Structure (DRX) | | Ductilité(test 180°) | E [GPa] | Tenue au recuit |
| | Co b | Ni c | Nb d | V e | Ta g | B f | Base a+b+c | Refr d+e | [µm] | Côté libre | Côté roue | - | | |
| Co50Ni18Nb12V5B15 | 50 | 18 | 12 | 5 | | 15 | 68 | 17 | 63 | AM | AM | partielle | 169 | Non |
| Co54Ni14Nb12V5B15 | 54 | 14 | 12 | 5 | | 15 | 68 | 17 | 63 | AM | AM | partielle | 169 | Non |
| Co32Ni40Nb8V5B15 | 32 | 40 | 8 | 5 | | 15 | 72 | 13 | 65 | AM/CR | AM | ductile | 162 | Oui |
| Co40Ni32Nb8V5B15 | 40 | 32 | 8 | 5 | | 15 | 72 | 13 | 68 | AM/CR | AM | ductile | 163 | Oui |
| Co42Ni30Nb8V5B15 | 42 | 30 | 8 | 5 | | 15 | 72 | 13 | 66 | AM/CR | AM | ductile | 160 | Oui |
| Co50Ni22Nb8V5B15 | 50 | 22 | 8 | 5 | | 15 | 72 | 13 | 65 | AM/CR | AM | ductile | 167 | Oui |
| Co50Ni22Nb4Ta4V5B15 | 50 | 22 | 4 | 5 | 4 | 15 | 72 | 13 | 67 | AM/CR | AM | ductile | 164 | Oui |
| AM = totalement amorphe          AM/CR = présentant une phase cristalline | | | | | | | | | | | | | | |

On constate que la substitution de Fe par Co donne des résultats tout-à-fait remarquables, comme l'indique le tableau 2. Une bande $Co_{50}Ni_{22}Nb_8V_5B_{15}$ de 65 $\mu$m d'épaisseur montre ainsi une tenue au recuit très élevée (temps de transition ductile-fragile à presque 15min à 340°C, soit 0.8 Tg [K]) et un module élastique de 167 GPa. De plus, cet alliage est paramagnétique à température ambiante, contrairement aux alliages base Fe élaborés jusqu'à maintenant.

**Revendications**

1. Alliage métallique amorphe répondant à la formule

$$Fe_aCo_bNi_cNb_dV_eB_fTa_g$$

dans laquelle :

$$0 \leq a \leq 70 \ ;$$

$$0 \leq b \leq 70 \ ;$$

$$8 < c \leq 60 \ ;$$

$$1 \leq d \leq 19 \ ;$$

$$1 \leq e \leq 10 \ ;$$

$$12 < f \leq 25 \ ;$$

$$0 \leq g \leq 5 \ ;$$

avec

$$20 \leq a + b \leq 70 \ ;$$

$$50 \leq a + b + c \leq 90 \ ;$$

$$5 \ \leq d + e \leq 20 \ ;$$

et

$$a + b + c + d + e + f + g = 100.$$

2. Alliage métallique amorphe selon la revendication 1, dans lequel :

$$0 \leq a \leq 60 \ ;$$

$$0 \leq b \leq 60 \; ;$$

$$10 \leq c \leq 50 \; ;$$

$$2 \leq d \leq 17 \; ;$$

$$2 \leq e \leq 8 \; ;$$

$$14 \leq f \leq 20 \; ;$$

$$0 \leq g \leq 4 \; ;$$

avec

$$25 \leq a + b \leq 65 \; ;$$

$$60 \leq a + b + c \leq 80 \; ;$$

et

$$8 \leq d + e \leq 17.$$

3. Alliage métallique amorphe selon la revendication 2, dans lequel :

$$0 \leq a \leq 56 \; ;$$

$$0 \leq b \leq 54 \; ;$$

$$12 \leq c \leq 40 \; ;$$

$$4 \leq d \leq 14 \; ;$$

$$4 \leq e \leq 6 \; ;$$

$$15 \leq f \leq 17 \; ;$$

$$0 \leq g \leq 4 \; ;$$

avec

$$30 \leq a + b \leq 60 \ ;$$

$$68 \leq a + b + c \leq 75 \ ;$$

et

$$11 \leq d + e \leq 15.$$

**4.** Alliage métallique amorphe selon l'une des revendications 1 à 3, dans lequel, dans l'alliage, g = 0.

**5.** Alliage métallique amorphe selon l'une des revendications 1 à 4, dans lequel a = 0.

**6.** Alliage métallique amorphe selon la revendication 5, lorsque celle-ci se réfère à la revendication 1, ou selon la revendication 5, lorsque cette dernière se réfère à la revendication 4 et que la revendication 4 se réfère à la revendication 1, dans lequel :

$$31 \leq b \leq 56 \ ;$$

$$13 \leq c \leq 41 \ ;$$

$$7 \leq d \leq 13 \ ;$$

$$4 \leq e \leq 10 \ ;$$

et

$$13 \leq f \leq 17.$$

**7.** Alliage métallique amorphe selon l'une des revendications 1 à 4, dans lequel b = 0.

**8.** Alliage métallique amorphe selon la revendication 1 ou selon la revendication 7, lorsque celle-ci se réfère à la revendication 1, dans lequel :

$$47 \leq a \leq 57 \ ;$$

$$17 \leq c \leq 23 \ ;$$

$$3 \leq d \leq 9 \ ;$$

$$4 \leq e \leq 10 \ ;$$

$$13 \leq f \leq 17 \ ;$$

et

$$g = 0.$$

9. Alliage métallique amorphe selon la revendication 3, dans lequel l'alliage est choisi parmi les alliages suivants :

$Fe_{50}Ni_{22}Nb_8V_5B_{15}$;
$Fe_{52}Ni_{20,66}Nb_{7,33}V_5B_{15}$;
$Fe_{56}Ni_{18}Nb_6V_5B_{15}$ ;
$Fe_{54}Ni_{20}Nb_6V_5B_{15}$;
$Fe_{52}Ni_{22}Nb_6V_5B_{15}$ ;
$Fe_{48}Ni_{22}Nb_6V_9B_{15}$ ;
$Fe_{52}Ni_{22}Nb_4V_7B_{15}$ ;
$Fe_{50}Ni_{22}Nb_6V_7B_{15}$ ;
$Fe_{30}Co_{20}Ni_{22}Nb_8V_5B_{15}$ ; et
$Fe_{36}CO_{24}Ni_{12}Nb_8V_5B_{15}$

10. Alliage métallique amorphe selon la revendication 9, dans lequel l'alliage est choisi parmi les alliages suivants :

$Fe_{56}Ni_{18}Nb_6V_5B_{15}$ ;
$Fe_{52}Ni_{22}Nb_6V_5B_{15}$ ;
$Fe_{52}Ni_{22}Nb_4V_7B_{15}$ ;
$Fe_{50}Ni_{22}Nb_6V_7B_{15}$ ;
$Fe_{30}Co_{20}Ni_{22}Nb_8V_5B_{15}$ ; et
$Fe_{36}Co_{24}Ni_{12}Nb_8V_5B_{15}$

11. Alliage métallique amorphe selon la revendication 10, dans lequel l'alliage est choisi parmi les alliages $Fe_{30}Co_{20}Ni_{22}Nb_8V_5B_{15}$ et $Fe_{36}Co_{24}Ni_{12}Nb_8V_5B_{15}$.

12. Alliage métallique amorphe selon la revendication 3, dans lequel l'alliage est choisi parmi les alliages suivants :

$Co_{50}Ni_{18}Nb_{12}V_5B_{15}$;
$Co_{54}Ni_{14}Nb_{12}V_5B_{15}$;
$Co_{32}Ni_{40}Nb_8V_5B_{15}$;
$Co_{40}Ni_{32}Nb_8V_5B_{15}$ ;
$Co_{42}Ni_{30}Nb_8V_5B_{15}$;
$Co_{50}Ni_{22}Nb_8V_5B_{15}$; et
$Co_{50}Ni_{22}Nb_4Ta_4V_5B_{15}$.

13. Alliage métallique amorphe selon la revendication 12, dans lequel l'alliage est choisi parmi les alliages suivants :

$Co_{32}Ni_{40}Nb_8V_5B_{15}$;
$C0_{40}Ni_{32}Nb_8V_5B_{15}$;
$Co_{42}Ni_{30}Nb_8V_5B_{15}$;
$Co_{50}Ni_{22}Nb_8V_5B_{15}$; et
$Co_{50}Ni_{22}Nb_4Ta_4V_5B_{15}$.

14. Alliage métallique amorphe selon l'une des revendications 1 à 13 se présentant sous forme d'un solide non pulvérulent.

15. Procédé de préparation d'un alliage selon l'une des revendications 1 à 14, dans lequel, sous atmosphère inerte :

a) on réalise une pré-fusion des éléments métalliques purs Fe et/ou Co, Ni, Nb et V dans un récipient ;
b) on chauffe du bore, de façon à éliminer les éventuelles molécules de gaz qu'il contient ;
c) on mélange les éléments métalliques pré-fondus et le bore solide ;
d) on chauffe le mélange obtenu ;

e) on le refroidit ;

f) on répète éventuellement une ou plusieurs fois les étapes d) et e), la dernière étape e) étant une hypertrempe.

16. Procédé selon la revendication 15, dans lequel l'étape c) est divisée en sous-étapes de formation de mélanges partiels de manière à former des pré-alliages dont la température de fusion est inférieure à celle des constituants individuels.

17. Procédé selon la revendication 15 ou 16, comprenant en outre une étape de coulage de l'alliage métallique amorphe sous forme de ruban ou de fil.

18. Procédé selon la revendication 17, dans lequel l'hypertrempe et le coulage sous forme de ruban ou de fil sont réalisés simultanément.

19. Procédé selon la revendication 15, dans lequel l'hypertrempe et le coulage sont réalisés par PFC.

20. Utilisation d'un alliage métallique amorphe selon l'une des revendications 1 à 14 comme ressort.

21. Procédé selon l'une des revendications 15 à 19, **caractérisé en ce qu'**on ajoute du Ta.

**Patentansprüche**

1. Eine amorphe metallische Legierung entsprechend der Formel

$$Fe_a Co_b Ni_c Nb_d V_e \, B_f Ta_g$$

worin:

$$0 \leq a \leq 70 \; ;$$

$$0 \leq b \leq 70 \; ;$$

$$8 < c \leq 60 \; ;$$

$$1 \leq d \leq 19 \; ;$$

$$1 \leq e \leq 10 \; ;$$

$$12 < f \leq 25 \; ;$$

$$0 \leq g \leq 5 \; ;$$

mit

$$20 \leq a + b \leq 70 \; ;$$

$$50 \leq a + b + c \leq 90 \; ;$$

$$5 \leq d + e \leq 20 \ ;$$

und

$$a + b + c + d + e + f + g = 100.$$

2. Amorphe metallische Legierung nach Anspruch 1, worin:

$$0 \leq a \leq 60 \ ;$$

$$0 \leq b \leq 60 \ ;$$

$$10 \leq c \leq 50 \ ;$$

$$2 \leq d \leq 17 \ ;$$

$$2 \leq e \leq 8 \ ;$$

$$14 \leq f \leq 20 \ ;$$

$$0 \leq g \leq 4 \ ;$$

mit

$$25 \leq a + b \leq 65 \ ;$$

$$60 \leq a + b + c \leq 80 \ ;$$

und

$$8 \leq d + e \leq 17.$$

3. Amorphe metallische Legierung nach Anspruch 2, worin:

$$0 \leq a \leq 56 \ ;$$

$$0 \leq b \leq 54 \ ;$$

$$12 \leq c \leq 40 \ ;$$

$$4 \leq d \leq 14 \; ;$$

$$4 \leq e \leq 6 \; ;$$

$$15 \leq f \leq 17 \; ;$$

$$0 \leq g \leq 4 \; ;$$

mit

$$30 \leq a + b \leq 60 \; ;$$

$$68 \leq a + b + c \leq 75 \; ;$$

und

$$11 \leq d + e \leq 15.$$

4.  Amorphe metallische Legierung nach einem der Ansprüche 1 bis 3, worin in der Legierung g=0.

5.  Amorphe metallische Legierung nach einem der Ansprüche 1 bis 4, worin a = 0.

6.  Amorphe metallische Legierung nach Anspruch 5, wenn sich dieser auf den Anspruch 1 bezieht, oder nach dem Anspruch 5, wenn sich der auf den Anspruch 4 bezieht und der Anspruch 4 sich auf den Anspruch 1 bezieht, worin:

$$31 \leq b \leq 56 \; ;$$

$$13 \leq c \leq 41 \; ;$$

$$7 \leq d \leq 13 \; ;$$

$$4 \leq e \leq 10 \; ;$$

und

$$13 \leq f \leq 17.$$

7.  Amorphe metallische Legierung nach einem der Ansprüche 1 bis 4, worin b = 0.

8.  Amorphe metallische Legierung nach Anspruch 1 oder nach Anspruch 7, wenn sich dieser auf Anspruch 1 bezieht, worin:
    $$47 \leq a \leq 57;$$

$$17 \leq c \leq 23 \, ;$$

$$3 \leq d \leq 9 \, ;$$

$$4 \leq e \leq 10 \, ;$$

$$13 \leq f \leq 17 \, ;$$

und

$$g = 0.$$

9. Amorphe metallische Legierung nach Anspruch 3, worin die Legierung aus den folgenden Legierungen ausgewählt ist:

$Fe_{50}Ni_{22}Nb_8V_5B_{15}$;
$Fe_{52}Ni_{20,66}Nb_{7,33}V_5B_{15}$ $Fe_{56}Ni_{18}Nb_6V_5B_{15}$ ;
$Fe_{54}Ni_{20}Nb_6V_5B_{15}$ ;
$Fe_{52}Ni_{22}Nb_6V_5B_{15}$ ;
$Fe_{48}Ni_{22}Nb_6V_9B_{15}$;
$Fe_{52}Ni_{22}Nb_4V_7B_{15}$;
$Fe_{50}Ni_{22}Nb_6V_7B_{15}$;
$Fe_{30}CO_{20}Ni_{22}Nb_8V_5B_{15}$ ; und
$Fe_{36}Co_{24}Ni_{12}Nb_8V_5B_{15}$

10. Amorphe metallische Legierung nach Anspruch 9, worin die Legierung aus den folgenden Legierungen ausgewählt ist:

$Fe_{56}Ni_{18}Nb_6V_5B_{15}$;
$Fe_{52}Ni_{22}Nb_6V_5B_{15}$ ;
$Fe_{52}Ni_{22}Nb_4V_7B_{15}$;
$Fe_{50}Ni_{22}Nb_6V_7B_{15}$ ;
$Fe_{30}Co_{20}Ni_{22}Nb_8V_5B_{15}$ ; und
$Fe_{36}Co_{24}Ni_{12}Nb_8V_5B_{15}$

11. Amorphe metallische Legierung nach Anspruch 10, wobei die Legierung unter den Legierungen $Fe_{30}Co_{20}Ni_{22}Nb_8V_5B_{15}$ und $Fe_{36}Co_{24}Ni_{12}Nb_8V_5B_{15}$ ausgewählt ist.

12. Amorphe metallische Legierung nach Anspruch 3, wobei die Legierung aus den folgenden Legierungen ausgewählt ist:

$Co_{50}Ni_{18}Nb_{12}V_5B_{15}$ ;
$CO_{54}Ni_{14}Nb_{12}V_5B_{15}$ ;
$Co_{32}Ni_{40}Nb_8V_5B_{15}$ ;
$Co_{40}Ni_{32}Nb_8V_5B_{15}$;
$Co_{42}Ni_{30}Nb_8V_5B_{15}$;
$Co_{50}Ni_{22}Nb_8V_5B_{15}$; und
$Co_{50}Ni_{22}Nb_4Ta_4V_5B_{15}$.

13. Amorphe metallische Legierung nach Anspruch 12, wobei die Legierung aus den folgenden Legierungen ausgewählt ist:

$Co_{32}Ni_{40}Nb_8V_5B_{15}$;
$Co_{40}Ni_{32}Nb_8V_5B_{15}$;
$CO_{42}Ni_{30}Nb_8V_5B_{15}$;
$Co_{50}Ni_{22}Nb_8V_5B_{15}$; und
$Co_{50}Ni_{22}Nb_4Ta_4V_5B_{15}$.

14. Amorphe metallische Legierung nach einem der Ansprüche 1 bis 13, wobei sie in der Form eines nicht pulverförmigen Feststoffes vorliegt.

15. Verfahren zur Herstellung einer Legierung nach einem der Ansprüche 1 bis 14, worin man unter inerter Atmosphäre:

a) eine Vorschmelze der reinen metallischen Elemente Fe und/oder Co, Ni, Nb und V in einem Behälter durchführt;
b) das Bor erhitzt, so dass alle Gasmoleküle, die es eventuell enthält, entfernt werden;
c) die vorgeschmolzenen metallischen Elemente und das feste Bor vermischt;
d) das erhaltene Gemisch erhitzt;
e) es abkühlt;
f) die Schritte d) und e) gegebenenfalls ein oder mehrmals wiederholt, wobei der letzte Schritt e) ein schnelles Abschrecken ist.

16. Verfahren nach Anspruch 15, worin der Schritt c) in Teilschritte zur Ausbildung von Teilmischungen unterteilt ist, sodass Vorlegierungen gebildet werden, deren Schmelztemperatur niedriger ist als die der einzelnen Elemente.

17. Verfahren nach Anspruch 15 oder 16, umfassend überdies den Schritt des Gießens der amorphen metallischen Legierung in Form eines Bandes oder Drahtes.

18. Verfahren nach Anspruch 17, wobei das Abschrecken und das Gießen in Form eines Bandes oder Drahtes gleichzeitig durchgeführt werden.

19. Verfahren nach Anspruch 15, worin das Abschrecken und das Gießen durch PFC durchgeführt werden.

20. Verwendung einer amorphen metallischen Legierung nach einem der Ansprüche 1 bis 14 als Feder.

21. Verfahren nach einem der Ansprüche 15 bis 19, **dadurch gekennzeichnet, dass** man Ta hinzugibt.

**Claims**

1. An amorphous metal alloy corresponding to the formula

$$Fe_aCO_bNi_cNb_dV_eB_fTa_g$$

in which:

$$0 \leq a \leq 70;$$

$$0 \leq b \leq 70;$$

$$8 < c \leq 60;$$

$$1 \leq d \leq 19;$$

$$1 \le e \le 10;$$

$$12 < f \le 25;$$

$$0 \le g \le 5;$$

with

$$20 \le a + b \le 70;$$

$$50 \le a + b + c \le 90;$$

$$5 \le d + e \le 20;$$

and

$$a + b + c + d + e + f + g = 100.$$

2. The amorphous metal alloy as claimed in claim 1, in which:

$$0 \le a \le 60;$$

$$0 \le b \le 60;$$

$$10 \le c \le 50;$$

$$2 \le d \le 17;$$

$$2 \le e \le 8;$$

$$14 \le f \le 20;$$

$$0 \le g \le 4;$$

with

$$25 \le a + b \le 65;$$

$$60 \le a + b + c \le 80;$$

and

$$8 \leq d + e \leq 17.$$

3. The amorphous metal alloy as claimed in claim 2, in which:

$$0 \leq a \leq 56;$$

$$0 \leq b \leq 54;$$

$$12 \leq c \leq 40;$$

$$4 \leq d \leq 14;$$

$$4 \leq e \leq 6;$$

$$15 \leq f \leq 17;$$

$$0 \leq g \leq 4;$$

with

$$30 \leq a + b \leq 60;$$

$$68 \leq a + b + c \leq 75;$$

and

$$11 \leq d + e \leq 15.$$

4. The amorphous metal alloy as claimed in one of claims 1 to 3, in which g = 0.

5. The amorphous metal alloy as claimed in one of claims 1 to 4, in which a = 0.

6. The amorphous metal alloy as claimed in claim 5, when the latter refers to claim 1, or as claimed in claim 5, when the latter refers to claim 4 and when claim 4 refers to claim 1, in which:

$$31 \leq b \leq 56;$$

$$13 \leq c \leq 41;$$

$$7 \leq d \leq 13;$$

$$4 \leq e \leq 10;$$

and

$$13 \leq f \leq 17.$$

7. The amorphous metal alloy as claimed in one of claims 1 to 4, in which $b = 0$.

8. The amorphous metal alloy as claimed in claim 1 or as claimed in claim 7, when the latter refers to claim 1, in which:

$$47 \leq a \leq 57;$$

$$17 \leq c \leq 23;$$

$$3 \leq d \leq 9;$$

$$4 \leq e \leq 10;$$

$$13 \leq f \leq 17;$$

and

$$g = 0.$$

9. The amorphous metal alloy as claimed in claim 3, in which the alloy is selected from the following alloys:

$Fe_{50}Ni_{22}Nb_8V_5B_{15}$;
$Fe_{52}Ni_{20.66}Nb_{7.33}V_5B_{15}$;
$Fe_{56}Ni_{18}Nb_6V_5B_{15}$;
$Fe_{54}Ni_{20}Nb_6V_5B_{15}$;
$Fe_{52}Ni_{22}Nb_6V_5B_{15}$;
$Fe_{48}Ni_{22}Nb_6V_9B_{15}$;
$Fe_{52}Ni_{22}Nb_4V_7B_{15}$;
$Fe_{50}Ni_{22}Nb_6V_7B_{15}$;
$Fe_{30}Co_{20}Ni_{22}Nb_8V_5B_{15}$; and
$Fe_{36}Co_{24}Ni_{12}Nb_8V_5B_{15}$.

10. The amorphous metal alloy as claimed in claim 9, in which the alloy is selected from the following alloys:

$Fe_{56}Ni_{18}Nb_6V_5B_{15}$;
$Fe_{52}Ni_{22}Nb_6V_5B_{15}$;
$Fe_{52}Ni_{22}Nb_4V_7B_{15}$;
$Fe_{50}Ni_{22}Nb_6V_7B_{15}$;
$Fe_{30}Co_{20}Ni_{22}Nb_8V_5B_{15}$; and
$Fe_{36}Co_{24}Ni_{12}Nb_8V_5B_{15}$.

11. The amorphous metal alloy as claimed in claim 10, in which the alloy is selected from the alloys $Fe_{30}Co_{20}Ni_{22}Nb_8V_5B_{15}$ and $Fe_{36}Co_{24}Ni_{12}Nb_8V_5B_{15}$.

**12.** The amorphous metal alloy as claimed in claim 3, in which the alloy is selected from the following alloys:

$Co_{50}Ni_{18}Nb_{12}V_5B_{15}$;
$Co_{54}Ni_{14}Nb_{12}V_5B_{15}$ ;
$Co_{32}Ni_{40}Nb_8V_5B_{15}$;
$Co_{40}Ni_{32}Nb_8V_5B_{15}$ ;
$Co_{42}Ni_{30}Nb_8V_5B_{15}$ ;
$Co_{50}Ni_{22}Nb_8V_5B_{15}$; and
$Co_{50}Ni_{22}Nb_4Ta_4V_5B_{15}$.

**13.** The amorphous metal alloy as claimed in claim 12, in which the alloy is selected from the following alloys:

$Co_{32}Ni_{40}Nb_8V_5B_{15}$;
$Co_{40}Ni_{32}Nb_8V_5B_{15}$ ;
$Co_{42}Ni_{30}Nb_8V_5B_{15}$ ;
$Co_{50}Ni_{22}Nb_8V_5B_{15}$; and
$Co_{50}Ni_{22}Nb_4Ta_4V_5B_{15}$.

**14.** The amorphous metal alloy as claimed in one of claims 1 to 13, the alloy being a non pulverulent solid.

**15.** A method of preparing an alloy as claimed in one of claims 1 to 14, in which, under an inert atmosphere:

a) pre-melting of the pure metallic elements Fe and/or Co, Ni, Nb and V is carried out in a container;
b) boron is heated, so as to remove any gas molecules that it contains;
c) the pre-melted metallic elements and the solid boron are mixed;
d) the mixture obtained is heated;
e) it is cooled;
f) optionally steps d) and e) are repeated one or more times, the last step e) being a hyperquench.

**16.** The method as claimed in claim 15, in which step c) is divided into substeps of formation of partial mixtures so as to form pre-alloys whose melting point is below that of the individual constituents.

**17.** The method as claimed in claim 15 or 16, in which, it comprises a step of casting the amorphous metal alloy in the form of ribbon or wire.

**18.** The method as claimed in claim 17, in which hyperquenching and casting in the form of ribbon or wire are performed simultaneously.

**19.** The method as claimed in claim 15, in which hyperquenching and casting are carried out by PFC.

**20.** Use of an amorphous metal alloy according to one of claims 1 to 14 as a spring.

**21.** The method as claimed in one of claims 15 to 19, in which, Ta is added.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0018096 A
- EP 0072893 A
- WO 2010000081 A
- WO 2008125281 A
- WO 201000008 A
- WO 2011069273 A

**Littérature non-brevet citée dans la description**

- **GU et al.** Mechanical properties of iron-based bulk metallic glasses. *J. Mater. Res.,* 2007, vol. 22, 258
- **A.O. OLOFINJANA et al.** *J. of Materials Processing Tech.,* 2004, vol. 155 (156), 1344-1349
- **T. ZHANG ; A. INOUE.** *Mater.Trans. JIM,* 2000, vol. 41, 1463-1466
- *TEM analysis, Scripta materialia,* 2006, vol. 54, 1829